# EUROPÄISCHE PATENTSCHRIFT

(11) **EP 2 550 182 B1**
(45) Veröffentlichungstag und Bekanntmachung des Hinweises auf die Patenterteilung: **18.02.2015**
(21) Anmeldenummer: 10798012.0
(22) Anmeldetag: 17.12.2010
(51) Int. Cl.: B60R 1/06

(54) **FAHRZEUGAUSSENSPIEGELPAAR**
PAIR OF EXTERNAL VEHICLE MIRRORS
PAIRE DE RÉTROVISEURS EXTÉRIEURS DE VÉHICULE

(30) Priorität: 23.03.2010 DE 102010012316
(43) Veröffentlichungstag der Anmeldung: 30.01.2013
(73) Patentinhaber: Daimler AG, 70327 Stuttgart (DE)
(72) Erfinder: ASSMANN, Willibald, 73760 Ostfildern (DE); FRANKE, Fabian, 96272 Hochstadt (DE); FRIEDERICH, Michael, 70839 Gerlingen (DE); MUCH, Wolfgang, 72119 Ammerbuch (DE); NICKEL, Volker, 72189 Vöhringen (DE); SCHWED, Robert, 75385 Bad Teinach-Zavelstein (DE)
(74) Vertreter: JENSEN & SON
(86) Internationale Anmeldenummer: PCT/EP2010/007762
(87) Internationale Veröffentlichungsnummer: WO 2011/116810

(56) Entgegenhaltungen:
- EP-A2- 1 531 084
- DE-A1- 4 140 268

## Beschreibung

Die vorliegende Erfindung betrifft ein Fahrzeugaußenspiegelpaar mit einem fahrerseitigen und einem beifahrerseitigen Fahrzeugaußenspiegel gemäß dem Oberbegriff des Anspruchs 1. Das Dokument DE4140268A1 offenbart ein solches Fahrzeugaußenspiegelpaar. Die Erfindung betrifft außerdem ein Kraftfahrzeug mit einem Fahrzeugaußenspiegelpaar.

Aus der DE 85 33 057 U1 ist ein gattungsgemäßes Fahrzeugaußenspiegelpaar mit einem fahrerseitigen und einem beifahrerseitigen Fahrzeugaußenspiegel bekannt. Jeder dieser Fahrzeugaußenspiegel weist dabei einen Spiegelfuß und ein schwenkbar dazu angebrachtes Spiegelgehäuse auf, in dem ein verstellbares Spiegelglas angeordnet ist. Zwischen dem Spiegelfuß und dem Spiegelgehäuse ist dabei jeweils eine Einstellvorrichtung vorgesehen, die eine Einstellung eines Spiegelgehäuses auf zwei verschiedene Schwenkstellungen ermöglicht, sodass die Fahrzeugaußenspiegel sowohl bei einem rechts- als auch bei einem linksgelenkten Fahrzeug verwendbar sind. Durch die symmetrische Ausbildung des fahrerseitigen und beifahrerseitigen Fahrzeugaußenspiegels erhält man zwar eine symmetrische und dadurch besser handhabbare Windanströmsituation, gleichzeitig besteht jedoch eine nicht zu unterschätzende Einschränkung der Sicht.

Die vorliegende Erfindung beschäftigt sich daher mit dem Problem, für ein gattungsgemäßes Fahrzeugaußenspiegelpaar eine verbesserte oder zumindest eine alternative Ausführungsform anzugeben, die sich sowohl durch eine verbesserte Sicht als auch durch eine verbesserte Windanströmsituation auszeichnet.

Dieses Problem wird erfindungsgemäß durch die Gegenstände der unabhängigen Ansprüche gelöst. Vorteilhafte Ausführungsformen sind Gegenstand des abhängigen Anspruchs.

Die vorliegende Erfindung beruht auf dem allgemeinen Gedanken, einen fahrerseitigen und beifahrerseitigen Fahrzeugaußenspiegel aus einer Vorderansicht gesehen symmetrisch und aus einer Draufsicht gesehen asymmetrisch auszubilden. Durch die symmetrische Vorderansicht kann eine an beiden Fahrzeugspiegeln vergleichbare und dadurch leicht beherrschbare Windanströmsituation geschaffen werden, wogegen die asymmetrische Ausbildung der beiden Fahrzeugaußenspiegel von oben gesehen eine bessere Sicht ermöglicht. Jeder der Fahrzeugaußenspiegel weist dabei einen Spiegelfuß und ein schwenkbar dazu angeordnetes Spiegelgehäuse auf, in welchem ein verstellbares Spiegelglas angeordnet ist. Die Spiegelgehäuse beider Fahrzeugaußenspiegel sind dabei erfindungsgemäß symmetrisch ausgebildet, sodass sich die oben erwähnte gleiche und dadurch leicht beherrschbare Windanströmsituation ergibt, wobei an einer Rückseite der beiden Spiegelgehäuse jeweils eine das Spiegelglas einfassende Blende angeordnet ist, die sich bei beiden Fahrzeugaußenspiegeln jedoch unterscheidet, insbesondere asymmetrisch ausgebildet ist. Die Windanströmfläche der beiden Fahrzeugaußenspiegel ist somit symmetrisch und dadurch vergleichbar, wodurch insbesondere bisher bei asymmetrisch ausgebildeten Fahrzeugaußenspiegeln auftretende, störende Umströmungsgeräusche sowie Schmutzansammlungen reduziert werden können. Durch die asymmetrisch ausgebildeten Blenden hingegen verbessert sich die Sicht des Fahrers in den beifahrerseitigen Fahrzeugaußenspiegel und dadurch die Fahrsicherheit insgesamt. Das erfindungsgemäße Fahrzeugaußenspiegelpaar verbindet somit die aus dem Stand der Technik bekannten Vorteile eines komplett symmetrischen Fahrzeugaußenspiegelpaars hinsichtlich der Windanströmung sowie die Vorteile von aus dem Stand der Technik bekannten asymmetrischen Fahrzeugaußenspiegeln hinsichtlich der Sicht. Das Fahrzeugaußenspiegelpaar bietet darüber hinaus den großen Vorteil, dass sich dieses durch ein einfaches Austauschen der Blenden leicht an links- bzw. rechtsgelenkte Fahrzeuge anpassen lässt.

Bei einer vorteilhaften Weiterbildung der erfindungsgemäßen Lösung, weist die fahrerseitige Blende eine gleichbleibende Dicke auf, wogegen die beifahrerseitige Blende konisch ausgebildet ist. Die konische Ausbildung zeigt sich in einer vom Fahrzeug wegführenden, zunehmenden Dicke der Blende und einem dadurch vergrößerten Einsichtbereich des Fahrers in den beifahrerseitigen Fahrzeugaußenspiegel. Die erfindungsgemäß asymmetrisch ausgebildeten Blenden sind darüber hinaus optisch unauffällig, sodass der optische Gesamteindruck eines symmetrischen Fahrzeuges erreicht werden kann, das sowohl ein deutlich verbessertes Windanströmverhalten als auch eine deutlich verbesserte Sicht aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine Vorderansicht auf ein erfindungsgemäßes Fahrzeugaußenspiegelpaar,
- Fig. 2: eine Draufsicht auf das erfindungsgemäße Fahrzeugaußenspiegelpaar.

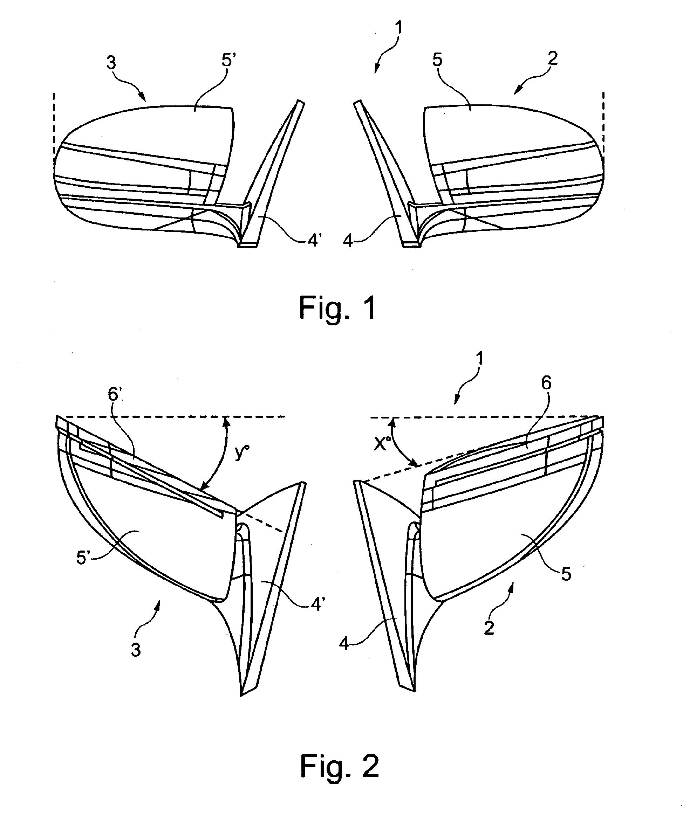

Entsprechend den Figuren 1 und 2, weist ein erfindungsgemäßes Fahrzeugaußenspiegelpaar 1 jeweils einen fahrerseitigen Fahrzeugaußenspiegel 2 sowie einen beifahrerseitigen Fahrzeugaußenspiegel 3 auf. Jeder der genannten Fahrzeugaußenspiegel 2,3, besitzt dabei einen Spiegelfuß 4,4' sowie ein schwenkbar dazu angeordnetes Spiegelgehäuse 5,5', in welchem ein nicht dargestelltes und verstellbares Spiegelglas angeordnet ist. Erfindungsgemäß sind nun die beiden Spiegelgehäuse 5,5' beider Fahrzeugaußenspiegel 2,2 symmetrisch aufgebaut, wie dies insbesondere aus der Fig. 1 ersichtlich wird, sodass sie eine gleiche und dadurch leicht beherrschbare Windanströmsituation ergibt. An einer Rückseite der beiden Spiegelgehäuse 5,5' ist jeweils eine das Spiegelglas einfassende Blende 6,6' angeordnet, wobei die Blende 6 des fahrerseitigen Fahrzeugaußenspiegels 2 asymmetrisch zur Blende 6' des beifahrerseitigen Fahrzeugaußenspiegels 3 ausgebildet ist (vgl. Fig. 2). Die asymmetrische Ausbildung der beiden Blenden 6,6' ermöglicht einem Fahrer eines mit dem erfindungsgemäßen Fahrzeugaußenspiegelpaar 1 ausgestatteten Kraftfahrzeugs eine verbesserte Sicht in den beifahrerseitigen Fahrzeugaußenspiegel 3 und dadurch eine verbesserte Erfassung der Umgebung des Kraftfahrzeuges, wodurch die Fahrsicherheit erhöht wird.

Betrachtet man die Fig. 2, so kann man erkennen, dass die fahrerseitige Blende 6 eine im Wesentlichen gleichbleibende Dicke aufweist, wogegen die beifahrerseitige Blende 6' konisch ausgebildet ist. Hieraus ergeben sich unterschiedliche Winkel X und Y, wobei der Winkel Y größer ist als der Winkel X. Hieraus ergibt sich für den Fahrer des Kraftfahrzeuges eine verbesserte Sicht in den beifahrerseitigen Fahrzeugaußenspiegel 3 im Vergleich zu einer Variante, bei welcher symmetrische Blenden verwendet werden und dadurch der Winkel Y gleich groß wie der Winkel X ist.

Das erfindungsgemäße Fahrzeugaußenspiegelpaar 1 kann darüber hinaus leicht an ein links- oder rechtsgelenktes Kraftfahrzeug angepasst werden, indem entsprechende Blenden 6,6' am jeweiligen Fahrzeugaußenspiegel 2,3 angeordnet werden. Bei einem rechtsgelenkten Kraftfahrzeug müsste somit die Blende 6' in gespiegelter Version an das Spiegelgehäuse 5 des gemäß der Fig. 2 als fahrerseitig bezeichneten Fahrzeugaußenspiegels 2 gesetzt werden. Mit dem erfindungsgemäßen Fahrzeugaußenspiegelpaar 1 lässt sich somit aufgrund der symmetrischen Spiegelgehäuse 5,5' eine identische Anströmung und dadurch ein deutlich verringerter Abstimmungsaufwand in einem Windkanal erreichen. Die symmetrisch ausgebildeten Spiegelgehäuse 5,5' reduzieren auch ein Geräuschniveau, das insbesondere bei asymmetrisch ausgebildeten Spiegelgehäusen entstehen würde. Gleichzeitig ermöglichen die asymmetrisch ausgebildeten Blenden 6,6' eine geringere Sicht- bzw. Eigenverdeckung, insbesondere Gehäuseteile, wobei die beiden Blenden 6,6' einen unterschiedlichen Schrägbeschnitt aufweisen.

## Patentansprüche

1. Fahrzeugaußenspiegelpaar (1) mit einem fahrerseitigen Fahrzeugaußenspiegel (2) und einem beifahrerseitigen Fahrzeugaußenspiegel (3), die jeweils einen Spiegelfuß (4,4') und ein schwenkbar dazu angebrachtes Spiegelgehäuse (5,5') aufweisen, in dem ein verstellbares Spiegelglas angeordnet ist, wobei die Spiegelgehäuse (5,5') beider Fahrzeugaußenspiegel (5,5') symmetrisch aufgebaut sind, so dass sich eine gleiche Windanströmsituation ergibt,
**dadurch gekennzeichnet, dass**
- an einer Rückseite der beiden Spiegelgehäuse (5,5') jeweils eine das Spiegelglas einfassende Blende (6,6') angeordnet ist, wobei die Blende (6) des fahrseitigen Fahrzeugaußenspiegels (2) asymmetrisch zu der Blende (6') des beifahrerseitigen Fahrzeugaußenspiegels (3) ausgebildet ist,
- der fahrerseitige und der beifahrerseitige Fahrzeugaußenspiegel (2,3) aus einer Vorderansicht gesehen symmetrisch und aus einer Draufsicht gesehen asymmetrisch ausgebildet sind.

2. Fahrzeugaußenspiegelpaar nach Anspruch 1,
**dadurch gekennzeichnet, dass**
die fahrerseitige Blende (6) eine gleichbleibende Dicke aufweist, wogegen die beifahrerseitige Blende (6') konisch ausgebildet ist.

3. Kraftfahrzeug mit einem Fahrzeugaußenspiegelpaar (1) nach Anspruch 1 oder 2.

## Claims

1. A vehicle exterior mirror pair (1) having a driver-side vehicle exterior mirror (2) and a passenger-side vehicle exterior mirror (3) which each have a mirror base (4, 4') and a mirror housing (5, 5') arranged so that it can pivot with respect to the mirror base (4, 4'), in which mirror housing (5, 5') an adjustable mirror glass is arranged, wherein the mirror housings (5, 5') of the two vehicle exterior mirrors (5, 5') are symmetrically constructed so that the same headwind situation results,
**characterised in that**
- a visor (6, 6') incorporating the mirror glass is arranged at the rear side of each of the two mirror housings (5, 5'), wherein the visor (6) of the driver-side vehicle exterior mirror (2) is formed asymmetrically with respect to the visor (6') of the passenger-side exterior mirror (3),
- the driver-side and the passenger-side vehicle exterior mirrors (2, 3) are symmetrical as seen from a front view and asymmetrical as seen from a top view.

2. Vehicle exterior mirror pair according to claim 1,
**characterised in that**
the driver-side visor (6) has a constant thickness, whereas the passenger-side visor (6') is conically formed.

3. Motor vehicle having a vehicle exterior mirror pair (1) according to claim 1 or 2.

## Revendications

1. Paire (1) de rétroviseurs extérieurs de véhicule comprenant un rétroviseur (2) extérieur de véhicule côté conducteur et un rétroviseur (3) extérieur de véhicule côté passager avant, qui présentent chacun une base de miroir (4, 4') et un boîtier de miroir (5, 5') placé de façon basculante sur ladite base de miroir, dans lequel est disposé un verre de miroir réglable, les boîtiers de miroir (5, 5') des deux rétroviseurs (5, 5') extérieurs de véhicule étant montés de façon symétrique, de sorte que l'on obtienne une situation d'arrivée du vent identique, **caractérisée en ce qu'**à chaque fois un cache (6, 6'), entourant le verre de miroir, est disposé sur un côté arrière des deux boîtiers de miroir (5, 5'), le cache (6) du rétroviseur (2) extérieur de véhicule côté conducteur étant conçu de façon asymétrique par rapport au cache (61) du rétroviseur (3) extérieur de véhicule côté passager avant, le rétroviseur extérieur de véhicule côté conducteur et le rétroviseur extérieur côté passager (2, 3) vus depuis une vue avant sont symétriques et sont asymétriques, vus depuis une vue du dessus.

2. Paire de rétroviseurs extérieurs de véhicule selon la revendication 1, **caractérisée en ce que** le cache (6) côté conducteur présente une épaisseur constante, tandis que le cache (6) côté passager avant est conique.

3. Véhicule équipé d'une paire (1) de rétroviseurs extérieurs de véhicule selon la revendication 1 ou la revendication 2.
